(19) Europäisches Patentamt
European Patent Office
Office européen des brevets

(11) EP 1 099 727 A2

(12) **EUROPÄISCHE PATENTANMELDUNG**

(43) Veröffentlichungstag:
**16.05.2001 Patentblatt 2001/20**

(51) Int Cl.[7]: **C08L 77/00**, C08L 77/12
// (C08L77/00, 77:12)

(21) Anmeldenummer: **00121723.1**

(22) Anmeldetag: **05.10.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **09.11.1999 DE 19953950**

(71) Anmelder: **BASF AKTIENGESELLSCHAFT
67056 Ludwigshafen (DE)**

(72) Erfinder:
- **Grutke, Stefan, Dr.
67434 Neustadt (DE)**
- **Gruber, Freddy, Dr.
76877 Offenbach (DE)**
- **Voit, Brigitte, Prof. Dr.
01062 Dresden (DE)**
- **Huber, Thomas, Dr.
85399 Goldbach (DE)**

(54) **Fliessfähige Polyamide**

(57) Thermoplastische Formmassen enthaltend

A) 39 bis 99,95 Gew.-% eines thermoplastischen Polyamids

B) 0,05 bis 9 Gew.-% eines verzweigten Homo- oder Copolymeren erhältlich durch Polymerisation von Monomeren der allgemeinen Formel I

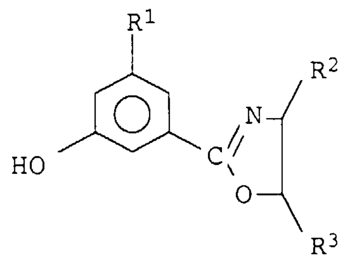

I

in der

$R^1$ einen Wasserstoff-, $COOR^4$-, OH- oder

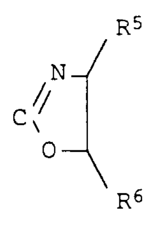

-Rest

$R^2$,$R^3$ unabhängig voneinander Wasserstoff, Methyl, Ethyl, Benzyl, Phenyl, bedeuten mit der Maßgabe, daß mindestens ein Rest $R^2$ oder $R^3$ Wasserstoff ist,

EP 1 099 727 A2

| | |
|---|---|
| $R^4$ | einen Wasserstoffrest, einen $C_1$- bis $C_4$-Alkylrest darstellt und |
| $R^5$, $R^6$ | unabhängig voneinander Wasserstoff, Methyl, Ethyl, Benzyl, Phenyl, mit der Maßgabe, daß mindestens ein Rest $R^5$ oder $R^6$ Wasserstoff ist, bedeuten |

C)0 bis 60 Gew.-% weiterer Zusatzstoffe,

wobei die Summe der Gewichtsprozente der Komponenten A) bis C) stets 100 % ergibt.

**Beschreibung**

Die Erfindung betrifft thermoplastische Formmassen enthaltend

A) 39 bis 99,95 Gew.-% eines thermoplastischen Polyamids

B) 0,05 bis 9 Gew.-% eines verzweigten Homo- oder Copolymeren erhältlich durch Polymerisation von Monomeren der allgemeinen Formel I

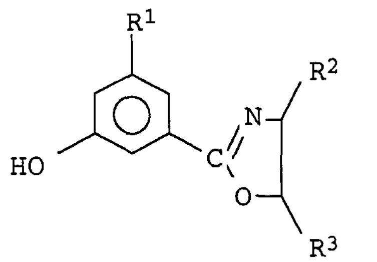

I

in der

$R^1$ einen Wasserstoff-, $COOR^{4-}$, OH- oder

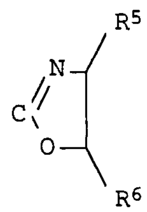

-Rest

$R^2$,$R^3$ unabhängig voneinander Wasserstoff, Methyl, Ethyl, Benzyl, Phenyl, bedeuten mit der Maßgabe, daß mindestens ein Rest $R^2$ oder $R^3$ Wasserstoff ist,

$R^4$ einen Wasserstoffrest, einen $C_1$- bis $C_4$-Alkylrest darstellt und

$R^5$, $R^6$ unabhängig voneinander Wasserstoff, Methyl, Ethyl, Benzyl, Phenyl, mit der Maßgabe, daß mindestens ein Rest $R^5$ oder $R^6$ Wasserstoff ist, bedeuten

C) 0 bis 60 Gew.-%weiterer Zusatzstoffe,

wobei die Summe der Gewichtsprozente der Komponenten A) bis C) stets 100 % ergibt.

Weiterhin betrifft die Erfindung die Verwendung der erfindungsgemäßen Formmassen zur Herstellung von Fasern, Folien und Formkörpern und die hierbei erhältlichen Formkörper jeglicher Art.

Verzweigte Polyamide sind u.a. aus der DE-A 19 654 179, DE-A 19 833 626, DE-A 19 543 161, EP-A 331 554, EP-A 672 703, DE-A 4 312 182, US 4 599 400 und EP-A 345 648 bekannt. Zur Ausbildung von H- oder sternförmigen Strukturen der Polymerketten werden üblicherweise bi- oder trifunktionelle Monomere, beispielsweise Oxazoline eingesetzt.

Als Monomere werden darüber hinaus Oxazoline als Verträglichkeitsvermittler für nichtmischbare Blends eingesetzt: z.B. EP-A 335 506 und EP-A 338 208. Die Herstellung von Oxazolinen ist u.a. aus der DE-A 39 15 874 und EP-A 315 856 bekannt.

Die Herstellung von linearen Polymeren aus Oxazolinen ist u.a. aus der DE-A 2029495 sowie
Kobayashi et al, Makromol. Chem. sowie 185,441 ff (1984) und Boutevin et al, Polymer Bulletin 34, 301 ff (1995) bekannt.

Weiterhin ist aus D.J. Massa et al, Macromolecules 28, 3214 (1995) bekannt, vollaromatische hochverzweigte Polyester mit Polycarbonat zu mischen (nicht mischbarer Blend), um die Fließfähigkeit zu verbessern.

Untersuchungen von mischbaren Blends aus vollaromatischen, hochverzweigten Polyamiden in einer PA 6

Matrix sind aus L. Wahlen, E. Scott, M. Loliman, R. Kleppinger, M. Kunze, J.H. Wendorff, $6^{th}$ European Symposium on Polymer Blends, 1999, Mainz, R. Kleppinger, M. Kunze, M. Roth, E. Scott, M. Soliman, L. Wahlen, J.H. Wendorff, $6^{th}$ European Symposium on Polymer Blends, 1999, Mainz, bekannt.

Bei der Verarbeitung von Spritzguß- und Faserprodukten ist die Fließfähigkeit unter Scherung der verwendeten Polyamide, neben der Kristallisationszeit und der Entformungszeit, maßgebend für die Zyklus- und/oder Verarbeitungszeiten. Eine Verbesserung des Fließverhaltens kann unter anderem durch eine Verminderung der Schmelzeviskosität des Ausgangspolymeren z.B. durch die Verwendung polyfunktioneller Regler oder durch eine Absenkung des Molekulargewichtes erreicht werden. Dabei werden allerdings entweder die Erstarrungseigenschaften oder die mechanischen Eigenschaften negativ beeinflußt. Daher ist es wünschenswert, die Fließfähigkeit der verwendeten Polyamide zu verbessern, ohne Einbußen bei den mechanischen Eigenschaften der Formkörper in Kauf zu nehmen. Bei einer weiteren Verarbeitung dieser Polyamide sollte keine weitere Veränderung der Viskosität zu beobachten sein, d. h. die Produkte sollten schmelzestabil sein.

Aufgabe der vorliegenden Erfindung war es daher, gut fließfähige Polyamidformmassen zur Verfügung zu stellen, welche gleichzeitig gute mechanische Eigenschaften aufweisen sowie schmelze- und verarbeitungsstabil sein sollen.

Demgemäß wurden die eingangs definierten Formmassen gefunden. Bevorzugte Ausführungsformen sind den Unteransprüchen zu entnehmen.

Überraschenderweise führt die Kombination von Polyamiden mit Polymeren, welche aus Monomeren mit mindestens einer Oxazolineinheit erhältlich sind, zu einer verbesserten Fließfähigkeit bei gleichbleibenden mechanischen Eigenschaften.

Die Polyamide der erfindungsgemäßen Formmassen weisen im allgemeinen eine Viskositätszahl von 90 bis 350, vorzugsweise 110 bis 240 ml/g auf bestimmt in einer 0,5 gew.-%-igen Lösung in 96 gew.-%-iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Poly-hexamethylensebacinsäureamid und Polycaprolactam sowie Copolyamide 6/66, insbesondere mit einem Anteil von 5 bis 95 Gew.-% an Caprolactam-Einheiten.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Selbstverständlich können auch Mischungen (Blends) derartiger Polymere eingesetzt werden.

Die Polyamide sind in den erfindungsgemäßen Formmassen in Mengen von 39 bis 99,95, vorzugsweise von 50 bis 99,9 und insbesondere von 60 bis 97 Gew.-% enthalten.

Bevorzugte erfindungsgemäße Polyamide A) weisen ein Verhältnis von COOH- zu $NH_2$- Endgruppen von > 1, vorzugsweise ≥ 1,3 und insbesondere ≥ 1,5 auf.

Als Komponente B) enthalten die erfindungsgemäßen Formmassen 0,05 bis 9, vorzugsweise 0,1 bis 3 Gew. % eines verzweigten Homo- oder Copolymeren, vorzugsweise Homopolymeren erhältlich durch Polymerisation von Monomeren der allgemeinen Formel I

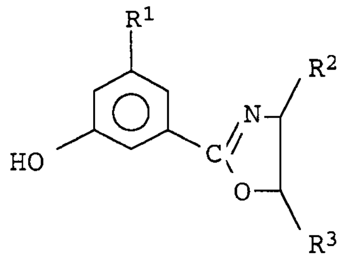

I

in der

$R^1$ einen Wasserstoff-, $COOR^{4-}$, OH- oder

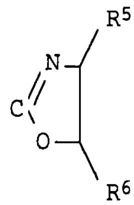

Rest, vorzugsweise OH-Rest

$R^2$,$R^3$ unabhängig voneinander Wasserstoff, Methyl, Ethyl, Benzyl, Phenyl bedeuten, mit der Maßgabe, daß mindestens ein Rest $R^2$ oder $R^3$ Wasserstoff ist; vorzugsweise stellen $R^2$ und $R^3$ Wasserstoff dar,

$R^4$ einen Wasserstoffrest, einen $C_1$- bis $C_4$-Alkylrest darstellt, vorzugsweise einen Methylrest,

$R^5$, $R^6$ unabhängig voneinander Wasserstoff, Methyl, Ethyl, Benzyl, Phenyl darstellen, mit der Maßgabe, daß mindestens ein Rest $R^5$ oder $R^6$ Wasserstoff ist.

Vorzugsweise sind beide Reste $R^5$ und $R^6$ Wasserstoff.

Die generelle Herstellungsweise derartiger Monomere und deren Polymerisation (in Lösung oder Schmelze) und deren Polymerisation ist den in der Einleitung erwähnten Dokumenten zu entnehmen, weshalb wegen weiterer Einzelheiten auf diese Schriften verwiesen sei. Bevorzugt sind Homopolymere aus Monomeren der allgemeinen Formel I.

Die hochverzweigten Polymere (Polyetheramide) weisen eine Struktur der allgemeinen Formel II auf:

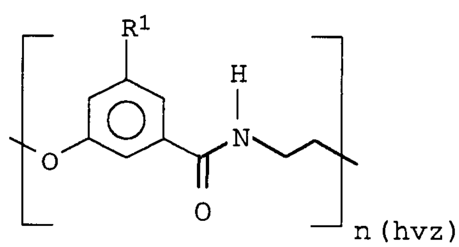

II

mit n > 10 vorzugsweise > 20 und
(hvz) = hochverzweigt

in der $R^1$ die in Formel I genannte Bedeutung hat und $R^5$ und $R^6$ für Wasserstoff stehen.

Bei der Polymerisation von Monomeren der Formel I, welche 2 Oxazolinreste enthalten, entstehen neben o. g. Polymeren hochverzweigte Polymere unterschiedlicher Struktur ($AB_x$-Monomere mit $x \geq 2$, wobei B den Oxazolingruppen entspricht).

Statistisch verzweigte, nicht vernetzte Polymere mit hohen Molmassen werden erhalten, wenn folgende Prämissen erfüllt sind:

| | |
|---|---|
| $AB_x$-Monomere mit x | ≥ 2, wobei |
| • | A nur mit B reagiert |
| • | Nebenreaktionen nicht auftreten |
| • | intramolekulare Kondensation ausgeschlossen wird |
| • | die Reaktivität von A und B unabhängig von der Molekülgröße ist |
| • | und alle Gruppen B die gleiche Reaktivität besitzen. |

Abbildung 1 zeigt die schematische Darstellung eines hochverzweigten Polymers. Die Polymerisation des trifunktionellen $AB_2$-Mo-nomeren führt zu einer statistisch verzweigten Struktur, mit genau einer funktionellen Gruppe A und n+1 B-Endgruppen. (A,B = Kupplungsgruppen, n = Anzahl der Wiederholeinheiten)

Unter diesen Annahmen wird erst bei einem exakt 100%igen Umsatz aller A-Gruppen der Gelpunkt erreicht. Dies ist der wichtigste Unterschied zu einem vernetzenden System, bei dem neben den bifunktionellen A-B, A-A und B-B Monomeren noch vernetzende Moleküle Ay oder By (Y ≥3) zugesetzt werden und welche bereits bei niedrigeren Umsätzen deutlich <100 % zu vernetzten Produkten führen. Aus den theoretischen Arbeiten von Flory (P.J. Flory, Principles of Polymer Chemistry, Cornell University Press, New York, 1953) geht weiter hervor, daß ein hochverzweigtes Polymer, welches durch Polykondensation eines $AB_2$ Monomers erhalten wurde, pro Molekül stets eine A-Funktionalität (fokale Gruppe) und (n+1) B-Gruppen besitzt, wobei n die Anzahl der verknüpften Bausteine darstellt. Im allgemeinen Fall $AB_x$ besitzt ein Polymermolekül (f*n-2n+1) B Funktionalitäten, mit x = (f-1) und f = Anzahl aller funktioneller Gruppen im Monomer.

Ein weiteres wichtiges Kriterium ist der Verzweigungskoeffizient a. Dieser ist definiert als die Wahrscheinlichkeit, daß eine funktionelle Gruppe einer Verzweigungseinheit mit einer anderen Verzweigungseinheit verknüpft wird. Im Fall eines hochverzweigten Polymers ist dies genau die Wahrscheinlichkeit $p_B$, welche die Reaktion einer beliebigen funktionellen Gruppe B angibt. Da aufgrund obiger Annahme A nur mit B intermolekular reagieren kann, muß die Anzahl der abreagierten Gruppen A und B gleich groß sein.

$$p_B \cdot (f-1) = p_A = p \qquad \text{Gleichung 1}$$

mit x = f-1 in einem $AB_x$ Monomeren

Somit ergibt sich für den Verzweigungskoeffizient $\alpha$

$$\alpha = p_B = \frac{p}{(f-1)} \qquad \text{Gleichung 2}$$

Dieser kann bei einem Umsatz von 100 % (p=1) maximal einen Wert von $\alpha_{max}$ = 1/(f-1) annehmen. Allerdings wird in der Praxis ein 100%iger Umsatz aller A-Funktionalitäten nie erreicht. Für den Fall von $AB_2$ Monomeren ist $\alpha_{max}$ = 1/2 (unendlich großes Molekül). Nach Flory tritt der Gelpunkt erst bei einem kritischen Verzweigungsgrad $\alpha_c$ > 1/2 auf, für ein Monomer mit einer Funktionalität von f = 3. Somit kann bei einem hochverzweigten System, welches auf $AB_2$ Monomere basiert, erst bei einem Umsatz von 100 % der kritische Punkt auftreten. Daraus ergibt sich die Möglichkeit, polymere Systeme nahe am Vernetzungspunkt zu studieren.

Gleichung 3 beschreibt den Zusammenhang zwischen Umsatz und Zahlenmittel des Polymerisationsgrades:

$$\bar{P}_n = \bar{X}_n = \frac{1}{(1-p)} = \frac{1}{(1-\alpha\ (f-1))} \qquad \text{Gleichung 3}$$

Ähnlich kann auch eine Beziehung zwischen dem Gewichtsmittel und dem Verzweigungskoeffizienten wiedergegeben werden.

$$\bar{X}_w = \frac{1-\alpha^2 (f-1)}{[1-\alpha (f-1)]^2} \quad \text{Gleichung 4}$$

Nach Flory wird nun die Divergenz zwischen Gewichts- und Zahlenmittel immer größer, je näher sich das System am kritischen Punkt oder Gelpunkt befindet:

$$\frac{\bar{X}_w}{\bar{X}_n} = \frac{1-\alpha^2(f-1)}{1-\alpha (f-1)} = \frac{f-1-p_A^2}{(1-p_A) \cdot (f-1)} \quad \text{Gleichung 5}$$

$$\lim_{\alpha \to 1/2} \frac{\bar{X}_w}{\bar{X}_n} = \infty \text{ für } f = 3 \quad \text{Gleichung 6}$$

Somit wird die Molmassenverteilung am Gelpunkt unendlich breit.

Abbildung 2 zeigt ein hochverzweigtes Polymer auf Basis eines $AB_2$-Monomers. Jedes Polymermolekül besitzt drei unterschiedliche Struktureinheiten: terminale Einheiten, lineare Einheiten und dendritische Einheiten. Zudem besitzt jedes Molekül genau eine fokale Gruppe.

Da alle funktionellen Gruppen gleich reaktiv sind, gibt es auch Wiederholungseinheiten, bei denen mehrere B Funktionalitäten reagiert haben können. Dadurch wird in das Molekül eine Verzweigung und somit eine weitere Wachstumsrichtung eingeführt. Abbildung 2 zeigt am Beispiel eines hochverzweigten Polymers auf Basis eines $AB_2$-Monomers die unterschiedlichen Struktureinheiten im hochverzweigten System.

1. Fokale Einheit: Gruppe A hat nicht reagiert; die fokale Einheit kann sowohl linear als auch dendritisch vorliegen.

2. Dendritische Einheit: Alle funktionellen Gruppen haben reagiert.

3. Lineare Einheit: eine Gruppe B hat nicht reagiert.

4. Terminale Einheit: keine Gruppe B hat reagiert.

Ist ein $AB_2$ Molekül nicht symmetrisch substituiert, kann man auch zwei unterschiedliche lineare Einheiten im Polymer finden. Ebenfalls treten für $AB_x$ Systeme mit x>2 weitere Struktureinheiten ) auf. Bei Copolykondensation von $AB_x$ mit By Kernmolekülen reagiert die fokale Gruppe ab und man findet statt dessen pro Polymermolekül genau ein Kernmolekül. In der Zwischenzeit wurden auch Versuche unternommen, hochverzweigte, nicht regelmäßig verzweigte Polymere ohne lineare Einheiten zu synthetisieren. Wie aus diesen 5 Ausführungen deutlich wird, ist der Verzweigungsgrad DB (degree of branching) hochverzweigter Moleküle eine charakteristische Größe. Eine theoretische Ableitung wurde von Flory (siehe oben) mit dem Verzweigungskoeffizienten $\alpha$ gegeben.

Da reale Systeme oft die Voraussetzungen von Flory nicht erfüllen, wird in der Praxis eine andere Definition verwendet.

Definition des Verzweigungsgrades:

5 Verhältnis der terminalen (T) und dendritischen (D) Struktureinheiten zu allen im Polymer auftretenden Einheiten (Gleichung 7).

$$DB = \frac{T + D}{T + D + L} \quad \text{Gleichung 7}$$

Der Verzweigungsgrad DB der Komponente B) beträgt mindestens 10 %, vorzugsweise mindestens 25 % und insbesondere mindestens 40 % und wird üblicherweise durch IR und NMR-Spektroskopie bestimmt.

Das mittlere Molekulargewicht ($M_n$ = Zahlenmittel) der Komponente B) beträgt vorzugsweise mindestens 5000 g/mol, insbesondere 10000 g/mol. Die $M_n$ Werte werden üblicherweise durch Gelpermeationschromatographie (GPC) ermittelt. Pumpe: Waters 510, UV Detektor: Knauer Spektralphotometer, RI-Detektor: Knauer Refraktometer,

Säulen: Zorbax PSM 60, Kalibrierung mit Polystyrolstandards, Fließrate: 0,5 ml/min., Eluent: Dimethylacetat 3 g/l LiCl und 2 Vol.% $H_2O$.

Als Komponente C) können die erfindungsgemäßen Formmassen bis zu 60 vorzugsweise bis zu 40 Gew.-% weiterer Zusatzstoffe enthalten.

Als Komponente C) können die erfindungsgemäßen Formmassen 0 bis 50, bevorzugt 5 bis 45 und insbesondere 10 bis 35 Gew.-% eines teilchen- oder faserförmigen Füllstoffes oder deren Mischungen enthalten.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignet sind auch nadelförmige oder teilchenförmige Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als teilchenförmige Füllstoffe seien weiterhin Kaolin, Glimmer, Talkum, Wollastonit, Montmorillonit, calciniertes Kaolin und Kreide oder hydrophobierte Schichtsilicate genannt.

Als Komponente E) können die erfindungsgemäßen Formmassen bis zu 30, vorzugsweise bis zu 20 Gew.-% weiterer Zusatzstoffe enthalten. Als Beispiel seien in Mengen von 0 bis 2 Gew.-% fluorhaltige Ethylenpolymerisate genannt. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seiten 484 bis 494, und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung z.B. in eine Polyamidschmelze erzielen.

Als weitere Zusatzstoffe seien genannt Hitze- und Lichtstabilisatoren, Gleit- und Entformungsmittel, Färbemittel, wie Farbstoffe und Pigmente in üblichen Mengen.

Zusätzliche Pigmente und Farbstoffe sind allgemein in Mengen bis zu 2, bevorzugt bis 1 und insbesondere bis 0,5 Gew.-% enthalten. Derartige Pigmente führen zu einer Farbvertiefung oder zu unterschiedlichen matten Abstufungen der schwarzen Farbe und sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß ($2\ PbCO_3 \cdot Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Nuancierung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu,(Cr,Fe)_2O_4$), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff). Als organischer Schwarzfarbstoff sei z.B. Nigrosin genannt.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, sog. HALS-Typen (hindered amine light stabilizer) und Mischungen dieser Verbindungen, vorzugsweise in Konzentrationen bis zu 1 Gew.%, bezogen auf das Gewicht der Mischung, einsetzbar. Synergistische Komponenten wie Triphenylphosphin können ebenso Verwendung finden.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Als Antistatika für SAN seien beispielsweise Kokosfettdiethanolamin und Natriumalkylsulfonate genannt.

Gleit- und Entformungsmittel, die in der Regel in Mengen bis zu 1 Gew.% der thermoplastischen Masse zugesetzt werden, sind Stearinsäure, Stearylalkohol, Octadecylalkohol, Stearinsäurealkylester und -amide, Ethylenbisstearylamid sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Als Flammschutzmittel seien beispielsweise roter Phosphor, Phosphorverbindungen, Melamincyanurat, Erdalkalicarbonate, Magnesiumhydroxid oder halogenhaltige wie Decabromdiphenylethan genannt, welche in Mengen bis zu 20 vorzugsweise bis zu 15 Gew.-% eingesetzt werden können.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Auch niedermolekulare Polymere kommen als Zusatzstoffe in Betracht, wobei Polyethylenwachs als Gleitmittel besonders bevorzugt ist.

Über Art und Menge dieser Zusatzstoffe lassen sich die gewünschten Eigenschaften der Endprodukte in weitem Maße steuern.

Die Herstellung der erfindungsgemäßen Formmassen kann nach an sich bekannten Verfahren erfolgen. Nach einer bevorzugten Ausführungsform erfolgt die Herstellung durch Zugabe der Komponenten B) und/oder C), zur Schmelze der Komponente A).

Zweckmäßigerweise verwendet man hierzu Extruder, z.B. Einschnekken- oder Zweischneckenextruder oder andere herkömmliche Plastifizierungsvorrichtungen wie Brabender-Mühlen oder Banbury-Mühlen.

Eine weitere bevorzugte Herstellweise ist die Herstellung der Komponente B) in der Schmelze, welche vorzugsweise in einem Seitenextruder erfolgen kann. Die so erhältliche Komponente B) wird vorzugsweise über den Seitenextruder in die Schmelze der Komponente A) dosiert.

Die Polyamidmischungen kann man danach einer weiteren thermischen Behandlung, d.h. einer Nachkondensation in fester Phase unterwerfen. In Temperaggregaten wie z.B. einem Taumler-Mischer oder kontinuierlich sowie diskontinuierlich betriebenen Temperrohren tempert man die in der jeweiligen Bearbeitungsform vorliegende Formmasse, bis die gewünschte Viskositätszahl VZ oder relative Viskosität $\eta$rel z.B. des Polyamids erreicht wird. Der Temperaturbereich der Temperung hängt vom Schmelzpunkt der reinen Komponente A) ab. Bevorzugte Temperaturbereiche sind 5 bis 50, vorzugsweise 20 bis 30°C unterhalb des jeweiligen Schmelzpunkts von A). Das Verfahren erfolgt vorzugsweise in einer Inertgasatmosphäre, wobei Stickstoff und überhitzter Wasserdampf als Inertgase bevorzugt sind.

Die Verweilzeiten betragen im allgemeinen von 0,5 bis 50, vorzugsweise 4 bis 20 Stunden. Anschließend werden aus den Formmassen mittels üblicher Vorrichtungen Formteile hergestellt.

Die erfindungsgemäßen Formmassen zeichnen sich durch eine sehr gute Fließfähigkeit aus. Die mechanischen Eigenschaften der Formkörper bleiben weitestgehend erhalten und die Verarbeitungsstabilität sowie Schmelzestabilität sind deutlich verbessert.

Deshalb eignen sich die erfindungsgemäßen Formmassen zur Herstellung von Fasern, Folien und Formkörpern jeglicher Art. Bevorzugte Anwendungen sind Elektro- und Elektronikbereich sowie Kfz-Bereich.

Beispiele

Herstellung der Komponente B

Es wurde folgendes Monomer eingesetzt:

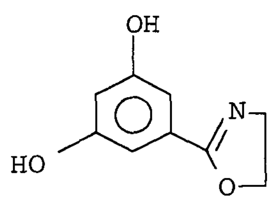

III

Die Reaktionskolben (Schlenkkolben) wurden bei 140°C ausgeheizt und unter Stickstoffstrom auf Raumtemperatur abgekühlt. Das Reaktionsgefäß wurde danach dreimal sekuriert, um eine Hydrolyse oder Oxidation des Monomeren zu vermeiden.

III (3,3 g, 18 mmol) wurde im Reaktionskolben vorgelegt. Der Kolben wurde mit einem KPG-Rührer ausgestattet und in ein auf 220°C vorgeheiztes Öl- oder Metallbad gegeben. Innerhalb von 2 Minuten schmolz das Monomer komplett auf und wurde für weitere 1 1/2 Stunden bei 220°C gerührt. Nach dem Abkühlen wurde ein gelbbraunes

glasartiges Rohprodukt erhalten, welches in wenig DMSO (5 ml) unter Erwärmung gelöst wurde. Das Produkt wurde aus Wasser oder Methanol gefällt, isoliert und im Vakuumofen bei 60°C getrocknet.

| | |
|---|---|
| Ansatz | 3,3 g (18,4 mmol) |
| III | 2,8 g (84 % d.Th.) |
| Reaktionszeit | 1,5 h |
| DB: | 59 % (es wurden die Signale bei 7,06 ($H^{3D}$), 6,48($H^{1L}$), 6,35 ($H^{1T}$) herangezogen) |
| Molmasse (GPC) | $\overline{M}_n$ = 21600 g/mol, $\overline{M}_w$ = 51000 g/mol, PDI = 2,3 |
| Molmasse (MALDI) | MALDI-TOF-MS mit HPG 2025 A MALDI-TOF-MS-System der Firma Hewlett Packcard |
| (Matrix: THF/2,5 Dihydroxybenzoesäure, | |
| Laserenergie 5,79 µJ) | $\overline{M}_n$ = 1700 g/mol, PDI = 1,2 |
| Tg | 175°C |
| Viskosität (DMF,30°C) | $\eta_{inh}$ = 0,119 dL/g |

Tabelle 1:

| Verzweigungsgrade und Molmassen von hochverzweigten Polyetheramiden, dargestellt in verschiedenen Reaktionsmedien | | | | |
|---|---|---|---|---|
| Nummer | Polymer | DB % | $\overline{M}_n$ g/mol | PDI |
| B/1 | P2 | 59 | 22000 | 2,3 |
| B/2 | P3 | 53 | 22100 | 3,4 |

DB = Verzweigungsgrad
$\overline{M}_n$ = Molmasse mittels GPC (DMAc, 2 Vol % Wasser, 3 g/L LiCl)
PDI = Polydispersitätsindex

Für die Blendversuche wurde B/1 ≙ P2 eingesetzt.

Komponenten A

Die verwendeten PA6 wurden durch die hydrolytische Polymerisation von ε-Caprolactam in einem Kessel bei 270°C unter Zusatz von ca. 20 Gew.-% Wasser hergestellt. Die Produkte enthielten bedingt durch das Polykondensationsgleichgewicht von PA6 oligomere Produkte und Restmonomer. Daher wurden diese niedermolekularen Komponenten extrahiert.

Die bereitgestellten PA6-Proben unterschieden sich im Verhältnis der Endgruppen (Säure- zu Amingruppen) und auch in ihrer Viskositätszahl (VZ).

Tabelle 2:

| Charakterisierungsdaten der PA6 Proben (Endgruppenzahl, Regler, Viskositätszahl VZ) | | | | |
|---|---|---|---|---|
| PA6 | COOH/ mmol/kg | $NH_2$/mmol/kg | Regler | VZ |
| B40 | 192 | 19 | Adipinsäure | 75 |
| B48 | 46 | 108 | Triaceton- diamin[1] | 118 |
| B56 | 53 | 57 | | 149 |

[1] Triacetondiamin = 4-Amino-2,2,6,6-Tetramethylpiperidin

Herstellung der Blends

Beide Blendkomponenten wurden gleichzeitig bei 250°C in das Mischaggregat gegeben und bei einer

Schneckenumdrehungszahl von 100 U/min 5 Minuten lang gemischt. Das Drehmoment wurde jede Minute abgelesen und aufgezeichnet. Blends wurden mit 0,1 Gew.-%, 1 Gew.-% und 10 Gew.-% hochverzweigtem Polyetheramid hergestellt (sowie eine 0-Probe von jedem zur Verfügung stehenden Polyamid). Der Blend mit 10 Gew.-% hochverzweigten Polyetheramid diente als Vergleichsversuch.

Zur Vereinfachung der Schreibweise wurden die Blends nach folgendem Schema benannt: Zunächst wurde das lineare Polyamid genannt, danach der Gewichtsanteil an hochverzweigtem Polyetheramid. So wurde beispielsweise der Blend mit 10 Gew.-% hochverzweigtem Polyetheramid und Überschuß an Säureendgruppen als B40-P210 bezeichnet. Analog wurde mit den unbehandelten Polyamiden verfahren, die eine unterschiedliche Verweilzeit im Minicompounder hatten (Beispiel: Das PA6 mit einer äquivalenten Anzahl an Endgruppen verweilte 5 Minuten im Minicompounder → B56-5').

Die aus dem Minicompounder erhaltenen Schmelzstränge wurden alle im Exsikkator unter Kieselgel trocken aufbewahrt. Die thermischen und rheologischen Untersuchungen wurden an den Strängen durchgeführt. Für die DMA-Messung und den Zugversuch wurden die Stränge zu 1 mm dicken Platten gepreßt und Probekörper (30x5x1 mm) herausgeschnitten.

Charakterisierung verschiedener Blendtypen

- Thermische Untersuchung

Die Analyse der Kühlkurven der Blends B56-P2-1 und B56-P2-10 ergibt für B56-P2-01 und B56-P2-1 nur eine geringe Änderung der Onset-Kristallisationstemperatur, bei B56-P2-10 ist sie deutlicher erniedrigt (Tabelle 3). Die Kristallisationsgeschwindigkeit ändert sich kaum, allerdings nimmt die Exothermie mit zunehmenden Gehalt an P2 aufgrund des eingebrachten Anteils leicht ab.

Tabelle 3:

| DSC-Daten (Perkin Elmer DSC 7) der Heiz- und Kühlkurven aller Blends auf Basis von B56 (Heiz- und Kühlgeschwindigkeit: 10 K/ min) | | | | |
|---|---|---|---|---|
| Probe | $T_m$ in °C | $\Delta H_f$ in J/g | $T_{c,o,}$ in °C | $\Delta H_c$ in J/g |
| B56-5' | 222,6 | 74,2 | 192,7 | -74,9 |
| B56-P2-01 | 220,5 | 73,5 | 193,3 | -74,6 |
| B56-P2-1 | 222,5 | 78,1 | 192,9 | -72,6 |
| B56-P2-10 | 221,0 | 67,5 | 190,8 | -65,0 |

$T_m$ = Schmelzpunkt (Maximum)
$\Delta H_f$ = Schmelzwärme
Tc,o = Onsetkristallisationstemperatur
$\Delta H_c$ = Kristallisationswärme

Bei einem höheren Gehalt an P2 wird die Kristallisation der Matrix gestört. Dies machte sich durch die Erniedrigung der Schmelz- und Kristallisationswärmen bemerkbar.

In der Tabelle 4 sind die Glasübergangstemperaturen aufgeführt.

Tabelle 4:

| Glasübergangstemperaturen (Tg) und Wärmekapazitäten (Cp) der Blends B56 | | |
|---|---|---|
| Probe | $T_g$(°C) | $\Delta c_p$(J/gK) |
| P2 | 173 | 0,47 |
| B56-5' | 52-54 | 0,12 ± 0,02 |
| B56-P2-01 | 53 | 0,18 |
| B56-P2-1 | 58 | 0,15 |
| B56-P2-10 | 73 | 0,22 |

Die Verweilzeit der Mischungen entsprach dabei den Verweilzeiten für die Nullproben (B56-5').

Blends aus B48 und P2-DSC-Untersuchung

Die Analyse der Kühlkurven der Blends auf Basis von B48 zeigten keine Änderung der onset-Temperatur bei geringen Anteilen an P2. Erst bei B48-P2-10 wurde eine deutliche Erniedrigung der onset-Temperatur erkennbar. Es fand zwar eine Erniedrigung der Kristallisationswärme wie bei den oben beschriebenen Blendtypen statt, doch war diese weniger ausgeprägt. Die Schmelztemperaturen änderten sich bei allen drei Blends nur unwesentlich, jedoch nahmen die Schmelzwärmen mit steigendem Gehalt an P2 ab. Die Glastemperaturen der Blends stiegen ebenfalls mit zunehmendem Gehalt an hochverzweigtem Polymer im Blend. Dies deutete wieder auf eine vollkommene Mischbarkeit der beiden Komponenten hin.

Tabelle 5:

| Thermische Daten der Blends auf Basis von B48 | | | | | |
|---|---|---|---|---|---|
| Probe | $T_m$ in °C | $\Delta H_f$ in J/g | $T_{c,o,}$ in °C | $\Delta H_c$ in J/g | $T_g$(°C) |
| B48-5' | 220,7 | 71,4 | 193,3 | -70,7 | 52-54 |
| B848-P2-01 | 220,4 | 75,8 | 193,3 | -74,5 | 55 |
| B48-P2-1 | 220,3 | 73,7 | 193,3 | -72,9 | 55 |
| B48-P2-10 | 218,6 | 62,3 | 190,5 | -71,0 | 70 |

$T_m$ = Schmelzpunkt (Maximum)
$\Delta H_f$ = Schmelzwärme
$T_{c,o}$ = Onsetkristallisationstemperatur
$\Delta H_c$ = Kristallisationswärme
$T_g$ = Glasübergangstemperatur

Blends aus B40 und P2-DSC-Untersuchung

Bei Betrachtung dieser Kühlkurven wurde zunächst ein Ansteigen der onset-Temperaturen der Kristallisation bei den Blends B40-P2-01 und B40-P2-1 im Vergleich zur reinen Matrix erkennbar. Das zugefügte hochverzweigte Polyetheramid wirkte hier als Keimbildner. Die Kristallisationstemperatur fiel erst bei B40-P2-10 unter die Temperatur der Matrix. Die Kristallisationswärme blieb bei geringem Gehalt an P2 annähernd gleich, stieg aber stark bei einem Anteil von 10 Gew.-% der hochverzweigten Polymere im Blend B40-P2-10 an.

Wie bei den anderen Blendsystemen stieg hier die Glasübergangstemperatur der unterschiedlichen Blends in ähnlicher Weise. Damit konnte hier ebenfalls von einer vollständigen Mischbarkeit ausgegangen werden.

Tabelle 6:

| Thermische Daten der Blends auf Basis von B40 | | | | | |
|---|---|---|---|---|---|
| Probe | $T_m$ in °C | $\Delta H_f$ in J/g | $T_{c,o,}$ in °C | $\Delta H_c$ in J/g | $T_g$(°C) |
| B40-5' | 219,8 | 80,5 | 193,9 | -82,9 | 52-54 |
| B40-P2-01 | 218,5 | 82,3 | 194,3 | -80,1 | 55 |
| B40-P2-1 | 219,4 | 83,2 | 194,9 | -83,0 | 55 |
| B40-P2-10 | 217,5 | 72,3 | 191,4 | -71,0 | 72 |

$T_m$ = Schmelzpunkt (Maximum)
$\Delta H_f$ = Schmelzwärme
$T_{c,o}$ = Onsetkristallisationstemperatur
$\Delta H_c$ = Kristallisationswärme
$T_g$ = Glasübergangstemperatur

Vergleich der thermischen Daten der Blendtypen in Abhängigkeit der Matrix.

Die thermische Eigenschaften eines jeden Blendtypen B40, B48 oder B56 waren, wie oben beschrieben, einander alle ähnlich. Die on-set-Temperatur wurde mit steigendem Gehalt der hochverzweigeten Komponente erniedrigt, zudem verringerte sich die Schmelzwärme mit steigendem Anteil an P2. Bei allen drei Blendtypen stieg die

Glastemperatur der Matrix mit steigendem Gehalt an P2, so daß es sich bei den hier vorliegenden Blends um voll mischbare Systeme handelte.

Tabelle 7:

| Vergleich der Glasübergangstemperaturen und der Daten der Abkühlkurven verschiedener Blends mit gleichem Gehalt an P2 | | | |
|---|---|---|---|
| Probe | $T_{c,o,}$ in °C | $\Delta H_c$ in J/g | $T_g$(°C) |
| B40-5' | 193,3 | -82,9 | 52-54 |
| B48-5' | 193,3 | -70,7 | 52,54 |
| B56-5' | 192,7 | -74,9 | 55-54 |
| B40-P2-1 | 194,9 | -83,0 | 55 |
| B48-P2-1 | 193,3 | -72,9 | 55 |
| B56-P2-1 | 190,8 | -65,0 | 58 |

$T_{c,o}$ = Onsetkristallisationstemperatur
$\Delta H_c$ = Kristallisationswärme
Tg = Glasübergangstemperatur

Ein Vergleich von Blends mit gleichem Gehalt an hochverzweigter Komponente, z.B. alle Blends mit 1 Gew.-% hochverzweigtem Polyetheramid P2 zeigt, daß die Blendtypen auf Basis von B56, das eine äquivalente Anzahl an Säure- und Aminendgruppen aufwies, sowohl bei den onset-Temperaturen der Kristallisation, als auch bei den Kristallisationswärmen eine Mittelstellung aufwies. Die höchsten Werte hatten stets die Blends mit einem Überschuß an Säuregruppen B40. Die Blends auf Basis von B48 hatten jeweils die geringsten Kristallisationswärmen und Kristallisationstemperaturen. Diese Tendenz war auch schon bei den reinen Polyamiden zu erkennen. Die Art der Endgruppe hatte somit jeweils den gleichen Einfluß auf das Material, unabhängig von dem Gehalt an Blendkomponente.

Thermostabilität der Matrix und der Blends

Der Einfluß der hochverzweigten Komponente auf die Thermostabilität der Blends wurde an den unterschiedlichen linearen Polyamiden ohne hochverzweigte Komponente sowie an den Blends B40-P2-10 und B48-P2-10 mit dem höchsten Gehalt an hochverzweigten P2 untersucht. Zudem wurden die Proben B40-5' und B48-5'sowie B40-P2-10 und B48-P2-10 30 Minuten isotherm bei 250°C untersucht.

Alle untersuchten Proben wiesen eine Onset-Temperatur von 350°C, unabhängig vom Anteil der hochverzweigten Komponente auf. Bei 550°C zeigten die reinen Polyamide einen Reststoffgehalt von ca. 1 % und die verschiedenen Blends einen von 8-9 %.

Die isotherme Untersuchung an den Proben zeigte, daß die Blends bei dieser Temperatur sehr stabil waren. Dennoch vergrößerte P2 die Stabilität der Matrix. Die Stabilität von B48 sank innerhalb der isothermen Untersuchung um 1 % ab, der Blend B48-P2-10 lediglich um 0,3 %. Eine ähnliche Tendenz, wenn auch nicht so ausgeprägt, war bei B40 und B40-P2-10 zu erkennen. Während der isothermen Untersuchung bauten B40 als auch B40-P2-10 kaum ab (Verlust < 0,2 %).

Es zeigte sich, daß die mit Adipinsäure geregelten Polyamide und deren Blends in der isothermen Untersuchung eine etwas größere Stabilität besaßen, als die vergleichbaren, mit Triacetondiamin geregelten Materialien. Allerdings konnte bei einem Masseverlust von <1% innerhalb von 30 Minuten bei 250°C nicht von einem Abbau ausgegangen werden.

Rheologieuntersuchungen

Die aus dem Minicompounder erhaltenen Schmelzstränge wurden alle im Exsikkator über Kieselgel trocken aufbewahrt, für die Messung kurz geschnitten und in einem Platte-Platte Rheometer in der Schmelze bei 250°C unter N2-Atmosphäre untersucht. Die Proben wurden in einem Frequenzbereich zwischen 0,1 rad/s bis 100 rad/s vermessen.

Untersuchung an den Blendtypen B56

Zunächst wurde das reine B56-5'untersucht. Dabei wurde kein stabiles Verhalten beobachtet, sondern eine

stetige Zunahme der komplexen Viskosität über mehrere Meßzyklen. Das gleiche Verhalten wurde bei den Blends B56-P2-1 und B56-P2-1 beobachtet. Auch das hochverzweigte Polyetheramid P2 zeigte eine leichte Viskositätszunahme bei mehreren Läufen.

Die Untersuchung an B56-5' zeigten kaum eine Abhängigkeit der komplexen Viskosität von der Meßfrequenz. Die Nullscherviskosität liegt bei etwa 850 Pas. Das Material war überwiegend viskos, d.h. der Verlustmodul G'' ist größer als der Speichermodul G'(Abbildung 3).

Das hochverzweigte Polyetheramid hingegen zeigte eine starke, fast lineare Abhängigkeit der Viskosität von der Meßfrequenz. Eine Erhöhung der Meßfrequenz um eine Zehnerpotenz (von 1 auf 10 rad/s) bewirkte eine Erniedrigung der Viskosität auf etwa 20 % des Ausgangswertes. P2 zeigte ein thixotropes Verhalten (Fließverdünnung, shear thinning) und war überwiegend elastisch (siehe Abbildung 3).

Die Untersuchung von B56-P2-01 ergab eine deutlich geringere komplexe Viskosität als die des reinen B56-5'. Die Kurvenform entsprach der des B56-5'. Da der Blend Newtonsches Verhalten zeigte, konnte für B56-P2-01 die Nullscherviskosität bestimmt werden; sie lag bei 680 Pas. Der Verlustmodul war deutlich geringer als bei B56-5'der Speichermodul nur ein wenig höher. Die Zunahme des hochverzweigten Anteils um eine Zehnerpotenz bei B56-P2-1 wirkte sich nur geringfügig auf die Viskosität des Blends im Vergleich zu dem vorher beschriebenen B56-P2-01 aus. Nur bei niederen Frequenzen war eine erhöhte Viskosität im Vergleich zu dem anderen Blend festzustellen. Hier wirkte sich der erhöhte Anteil an hochverzweigtem Polyamid im Blend aus. Der Verlustmodul war fast identisch zu Blend B56-P2-01 und der Speichermodul leicht erniedrigt.

In Abbildung 3: sind die Komplexe Viskositäten η* der Blendtypen B56/P2a als Funktion der Frequenz (T=250°C) dargestellt.

Bei weiterer Erhöhung des Anteils an hochverzweigten P2 im Blend B56-P2-10 war eine deutliche Reduzierung der Viskosität zu erkennen.

Tabelle 8:

| Vergleich der komplexen Viskositäten η* der Blendtypen B56 und P2 bei einer Frequenz von 1 rad/s (T=250°C) | |
|---|---|
| Probe | η* |
| B56-5' | 845 |
| B56-P2-01 | 676 |
| B56-P2-1 | 649 |
| B56-P2-10 | 412 |
| P2 | 2940 |

REM-Untersuchung

Mit Rasterelektronenmikroskopie (REM) ist es möglich, die Morphologie eines Blendsystems näher zu betrachten. Da der Anteil an hochverzweigtem Polyetheramid bei B56-P2-01 und B56-P2-1 zu gering ist, um irgendwelche Kontraste zu erkennen, wurde nur B56-P2-10 mittels REM untersucht. Dazu wurde die Probe bei -196°C angeschnitten und 5 Stunden lang mit DMF "geätzt", um den hochverzweigten Anteil herauszulösen. Der Anschnitt wurde getrocknet und mit Gold gesputtert. Anschließend wurde der Anschnitt im Rasterelektronenmikroskop betrachtet. Es wurden verschiedene Aufnahmen mit unterschiedlicher Vergrößerung gemacht, in der oberen Abbildung 4 ist die 10000fache Vergrößerung dargestellt. Selbst bei dieser Vergrößerung ist keine Domänenbildung zu sehen. Dies deutet auf eine homogene Verteilung des hochverzweigten Polymers in der PA6 Matrix hin. Zum Vergleich wurde in der unteren Abbildung 4 zusätzlich ein nichtmischbares Zwei-Komponenten-System abgebildet, welches einen Blend in 10000facher Vergrößerung mit 90 % PP und 10 % hochverzweigtem Polyester mit aliphatischen Endgruppen darstellt (IV). Hier war deutlich eine Domänenbildung des hochverzweigten Polyesters zu erkennen, die im Polyamid-Blend vom hochverzweigten Polymer P2 nicht vorhanden war.

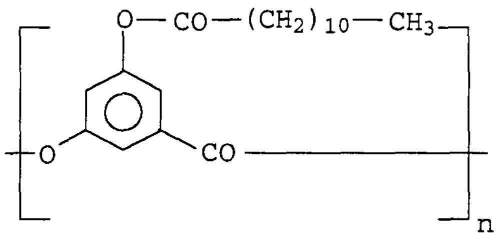

IV

Das Fehlen von Domänen, wie sie beispielsweise im Polypropylenblend zu sehen war, korrelierte sehr gut mit den beobachteten Viskositätserniedrigungen der Blends in der rheologischen Messung und auch mit der Erhöhung der Glastemperaturen der Blendtypen B56 in der DSC-Messung. Das hochverzweigte Polyetheramid war gleichmäßig im Submikrometermaßstab im PA6 verteilt.

Dynamisch-mechanische Analyse der Blendtypen B56

Der Einfluß des hochverzweigten Polyetheramids auf die mechanischen Eigenschaften der Materialien wurde anhand der dynamischmechanischen Analyse (DMA) untersucht. Die aus dem Minicompounder erhaltenen Stränge der verschiedenen Blendtypen wurden bei 240°C aufgeschmolzen und zu 1 mm dicken Scheiben gepreßt. Aus den Preßlingen der Blendtypen B56 wurden Prüfkörper mit den Ausmaßen 30x5x1 mm gefertigt. Die Messungen wurden im Biegemodus in Resonanz an den Prüfkörpern durchgeführt. Dabei wurde der Temperaturbereich von -50°C bis 200°C dynamisch-mechanisch untersucht; die Aufheizrate betrug 3K/min.

Alle Proben wurden mehrfach bestimmt, die nachfolgend diskutierten Ergebnisse konnten reproduziert werden.

Die Verlustmoduln E'' der jeweiligen Blends zeigten eine Erhöhung der Glastemperatur mit steigendem Anteil an hochverzweigtem Polyetheramid von 67°C auf 81°C (Abbildung 6). Die Steigerung des Anteils an P2 im Blend bewirkte auch eine Erhöhung der Maximalwerte des E''-Moduls der Blends. Von B56-P2-01 zu B56-P2-10 stieg somit die Energieaufnahme des Systems und die Proben wurden amorpher.

In Abbildung 6 wurden Verlustmoduln E'' der Blendtypen B56 als Funktion der Temperatur (Heizgeschwindigkeit: 3K/min, Resonanzmodus) dargestellt.

Der Speichermodul E' sank langsam bei steigender Temperatur bis hin zur Tg. Dies führte zu einem leichten Verlust der ursprünglichen mechanischen Eigenschaften. Nach dem Erreichen des Glaspunktes nahmen die Werte des E'-Moduls sprunghaft ab und das Material verlor seine mechanischen Eigenschaften. Der Speichermodul E' erhöhte sich stark von B56-P2-01 zu B56-P2-1 durch den wachsenden Anteil der hochverzweigten Komponente um eine Zehnerpotenz.

In Abbildung 5 wurden Speichermoduln E' der Blendtypen B56 als Funktion der Temperatur (Heizgeschwindigkeit: 3K/min, Resonanzmodus) dargestellt.

Zug-Dehnungs-Messungen an den Blendtypen B56

Die Proben für den Zugversuch wurden wie oben beschrieben angefertigt. Vor den Zug-Dehnungs-Messungen wurden alle Proben in einer Klimakammer drei Wochen lang konditioniert (23°C, 50 % Luftfeuchte).

Tabelle 9:

| Elastizitätsmoduln der verschiedenen Blendtypen B56 aus dem Zugversuch (Prüfgeschwindigkeit: 7,5 mm/min) | |
|---|---|
| Probe | E in GPa |
| B56-5' | 1,92 |
| B56-P2-01 | 1,93 |
| B56-P2-10 | 1,99 |

Viskositätsmessungen

Die Viskositätsmessungen wurden gemäß ISO 307 in Schwefelsäure 96 % bei 25°C durchgeführt. Die Konzentration der Lösungen betrug 0,005 g/ml.

In Tabelle 10 wurden alle Viskositätszahlen aufgeführt.

Tabelle 10:

| Viskositätszahlen der unterschiedlichen Blends (c = 0,005 g/ml, 25°C, H2S04) | | | |
|---|---|---|---|
| Anteil P2 in % | B40 | B48 | B56 |
| 0 | 69 | 131 | 174 |
| 0,1 | 67 | 104 | 163 |
| 1 | 67 | 94 | 168 |
| 10 | 61 | 122 | 152 |

**Patentansprüche**

**1.** Thermoplastische Formmassen enthaltend

A) 39 bis 99,95 Gew.-% eines thermoplastischen Polyamids

B) 0,05 bis 9 Gew.-% eines verzweigten Homo- oder Copolymeren erhältlich durch Polymerisation von Monomeren der allgemeinen Formel I

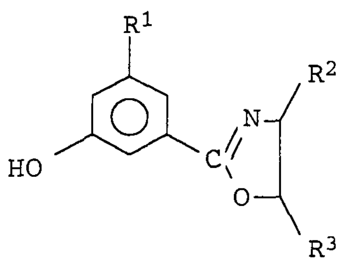

I

in der

$R^1$ einen Wasserstoff-, $COOR^{4-}$, OH- oder

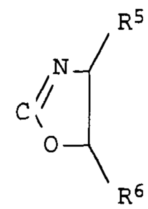

-Rest

$R^2$, $R^3$ unabhängig voneinander Wasserstoff, Methyl, Ethyl, Benzyl, Phenyl, bedeuten mit der Maßgabe, daß mindestens ein Rest $R^2$ oder $R^3$ Wasserstoff ist,

$R^4$ einen Wasserstoffrest, einen $C_1$- bis $C_4$-Alkylrest darstellt und

$R^5$, $R^6$ unabhängig voneinander Wasserstoff, Methyl, Ethyl, Benzyl, Phenyl, mit der Maßgabe, daß mindestens ein Rest $R^5$ oder $R^6$ Wasserstoff ist, bedeuten

C) 0 bis 60 Gew.-%weiterer Zusatzstoffe, wobei die Summe der Gewichtsprozente der Komponenten A) bis C) stets 100 % ergibt.

**2.** Thermoplastische Formmassen nach Anspruch 1, in denen die Komponente A ein Verhältnis von COOH- zu $NH_2$-Endgruppen >1 aufweist.

**3.** Thermoplastische Formmassen nach den Ansprüchen 1 oder 2, in denen die Komponente A Polyamid 6 ist.

**4.** Thermoplastische Formmassen nach den Ansprüchen 1 bis 3, enthaltend als Komponente B ein Polymer aus Monomeren der allgemeinen Formel I, in welcher $R^1$ OH und $R^2$, $R^3$ Wasserstoff bedeuten.

**5.** Thermoplastische Formmassen nach den Ansprüchen 1 bis 4, in denen die Komponente B einen Verzweigungsgrad DB von mindestens 10 % aufweist.

**6.** Thermoplastische Formmassen nach den Ansprüchen 1 bis 5, in denen die Komponente B ein mittleres Molekulargewicht ($M_n$ = Zahlenmittel) von mindestens 5000 g/mol aufweist.

**7.** Verwendung der thermoplastischen Formmassen gemäß den Ansprüchen 1 bis 6 zur Herstellung von Fasern, Folien und Formkörpern.

**8.** Formkörper, erhältlich aus den thermoplastischen Formmassen gemäß den Ansprüchen 1 bis 6.

FIG.1

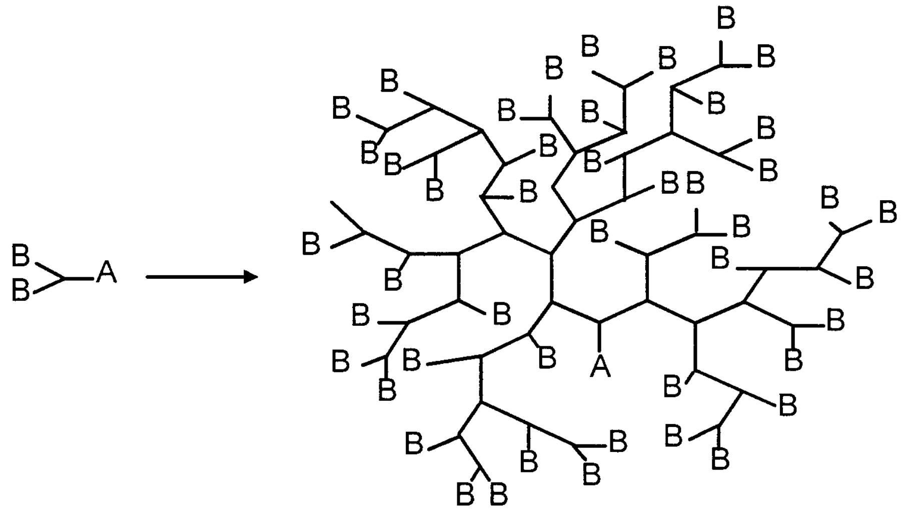

FIG.2

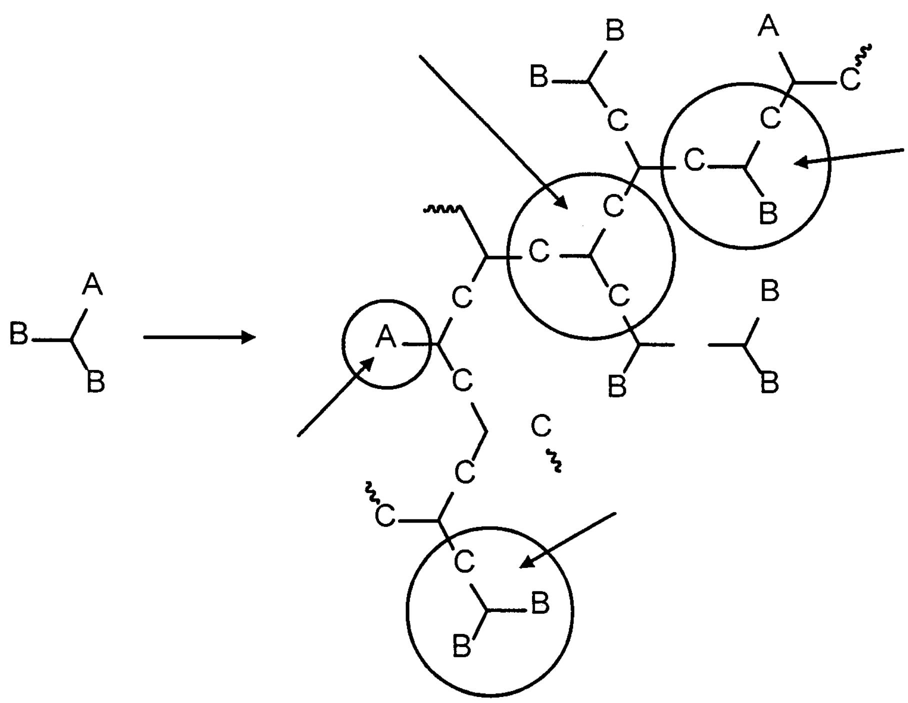

FIG.3

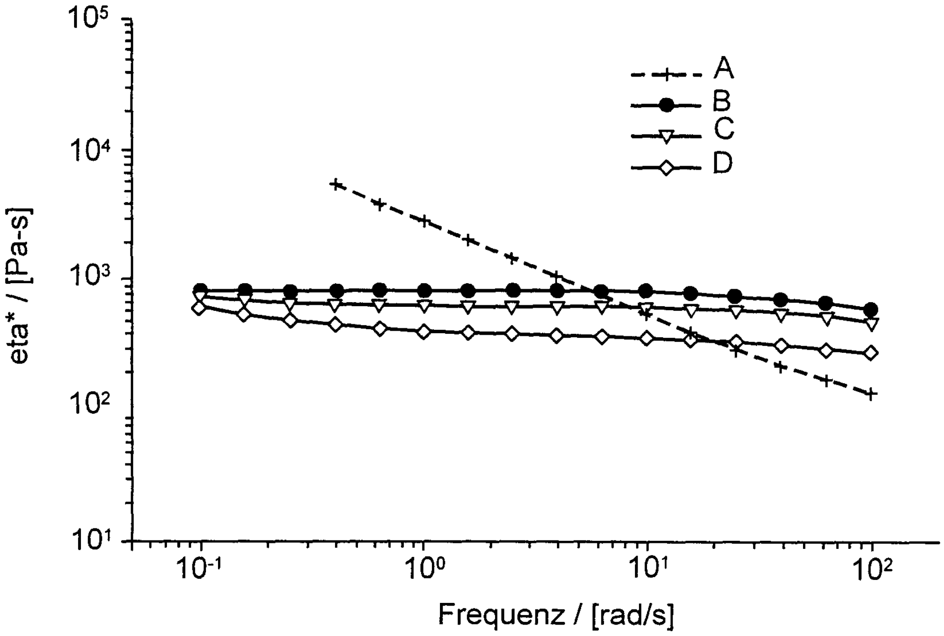

FIG.4

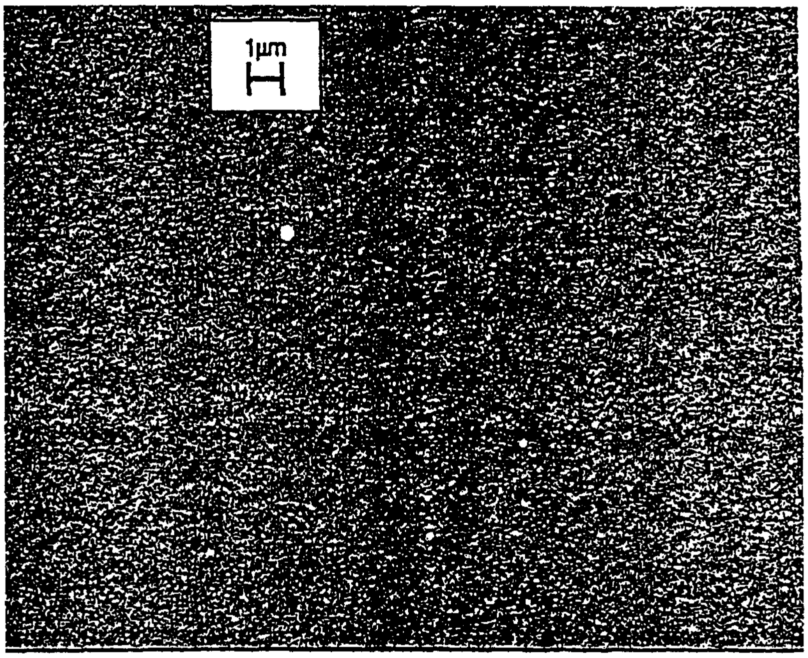


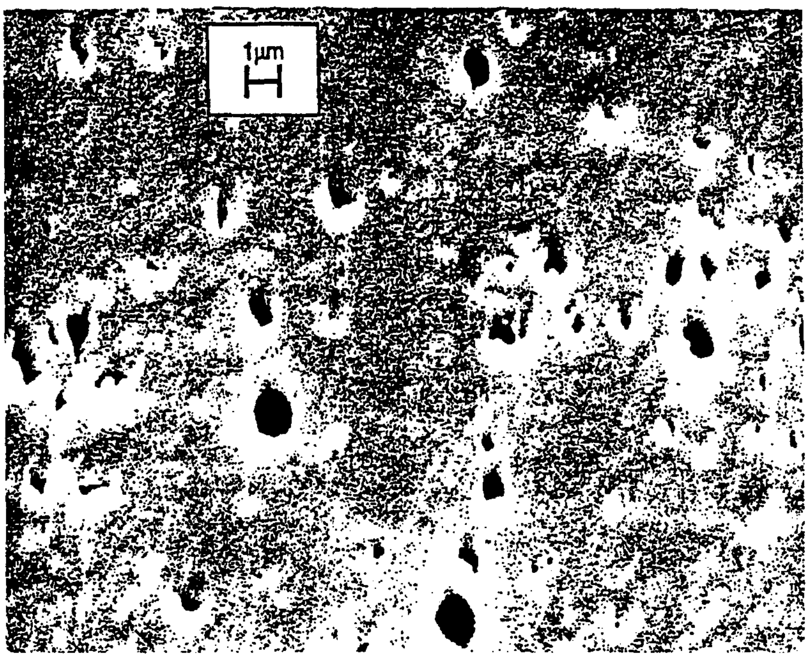

FIG.5

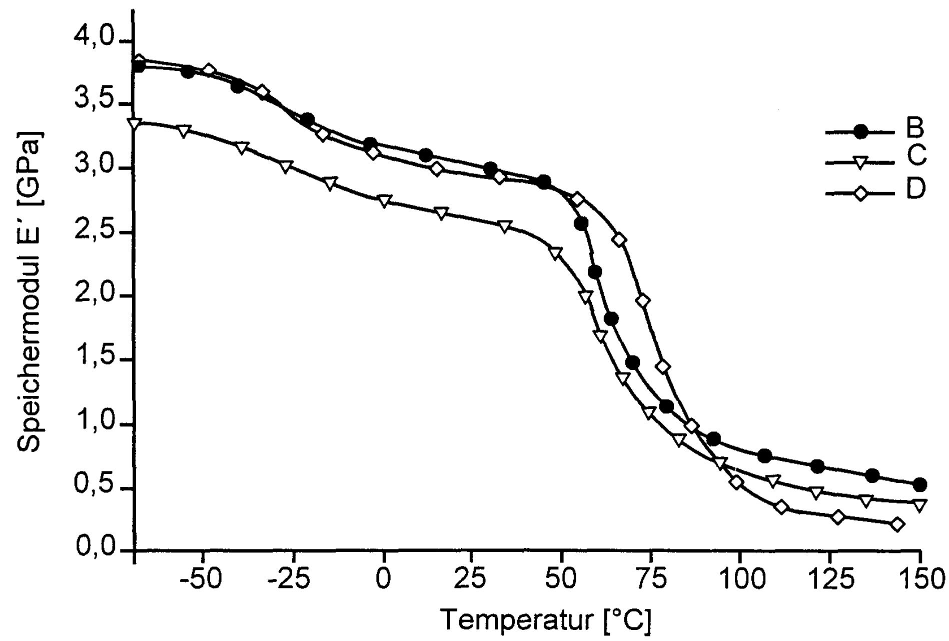
Speichermodul E´ [GPa]
4,0
3,5
3,0
2,5
2,0
1,5
1,0
0,5
0,0
-50
-25
0
25
50
75
100
125
150
Temperatur [°C]
B
C
D

FIG.6

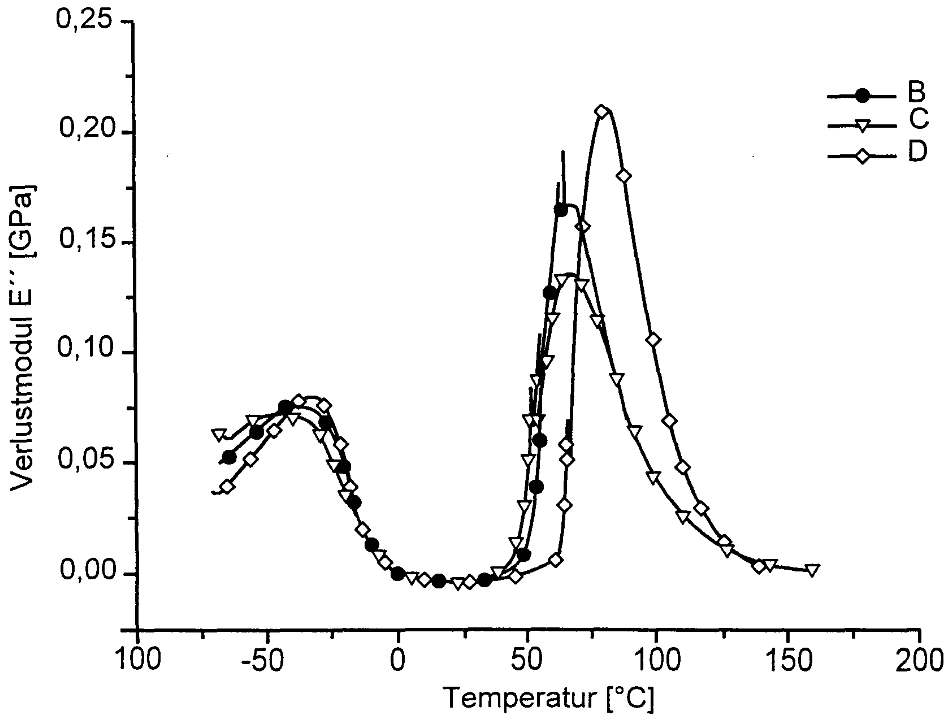
Verlustmodul E´´ [GPa]
0,25
0,20
0,15
0,10
0,05
0,00
100
-50
0
50
100
150
200
Temperatur [°C]
B
C
D